# EUROPEAN PATENT APPLICATION

(11) **EP 0 568 125 A1**
(43) Date of publication of application: **03.11.1993**
(21) Application number: 93200946.7
(22) Date of filing: 01.04.1993
(51) Int. Cl.: B65G 17/34, B65G 47/38

(54) **A conveyor**

(30) Priority: 28.04.1992 NL 9200766
(71) Applicant: VANDERLANDE INDUSTRIES NEDERLAND B.V., NL-5466 RB Veghel (NL)
(72) Inventor: Bodewes, Harmannus Josephus Arnoldus, NL-5403 LC Uden (NL)
(74) Representative: Vollebregt, Cornelis Jacobus, Ir.

(57) **Abstract**

The invention relates to a conveyor provided with means which are movable along a desired track, each of said means being provided with a supporting surface, which is intended for receiving an object to be moved along at least part of said track. The carrying means is constructed in such a manner that at a desired location an object present on the supporting surface of said carrying means can be discharged from the supporting surface, transversely to the direction of movement of the carrying means along the desired track. For that purpose the carrying means is provided with an electrically controlled driving means provided between the supporting surface and the remaining part of the carrying means, by means of which the supporting surface is pivotable through a desired angle with respect to the remaining part of the carrying means, about a pivot pin extending at least substantially in the direction of movement of the carrying means.

## Description

The invention relates to a conveyor provided with trolleys which are movable along a closed track, each of said trolleys being provided with a supporting surface, which is intended for receiving an object to be moved along at least part of said track, whereby a trolley is provided with an electrically controlled driving means provided between said supporting surface and the remaining part of the trolley, by means of which the supporting surface is pivotable through a desired angle with respect to the remaining part of the trolley, about a pivot pin extending at least substantially in the direction of movement of the trolley, so as to discharge the object present on the supporting surface from said supporting surface at a desired location.

Such conveyors are generally known, as is apparent from French Patents Nos. 2,268,575 and 2,355,577 and British Patents Nos. 2,153,772 and 2,170,159. When such conveyors are used objects are placed on the supporting surfaces of the trolleys at a certain station, to be displaced along the closed track to a discharge station, in which the supporting surface is pivoted about the pivot pin so as to allow the object to slide from the supporting surface. When moving between the various stations the supporting surfaces are maintained in a fixed, substantially horizontal position.

When using such conveyors it is strived at, however, to increase the rate of handling of the objects. When the speed of movement of the trolleys along the closed track is increased there is a danger, however, that objects present on the supporting surfaces are flung off said supporting surfaces in bends, under the influence of the centrifugal force.

According to the invention means along said track means are disposed for pivoting a supporting surface about the pivot pin in bends in such a manner, that objects are prevented from sliding off the supporting surface under the influence of the centrifugal force.

When using the construction according to the invention use is made in a simple manner of the possibility to pivot the supporting surfaces by slightly tilting the supporting surfaces in bends, in such a direction that the objects are prevented from being flung off the supporting surfaces under the influence of the trolleys rounding the bends at a comparatively high speed.

The invention will be explained in more detail hereafter with reference to possible embodiments of the construction according to the invention diagrammatically illustrated in the accompanying Figures.

Figure 1 diagrammatically shows a part of a possible embodiment of a conveyor according to the invention.

Figures 2 - 6 show various possible embodiments of the driving mechanism provided between the supporting surface and the remaining part of the carrying means.

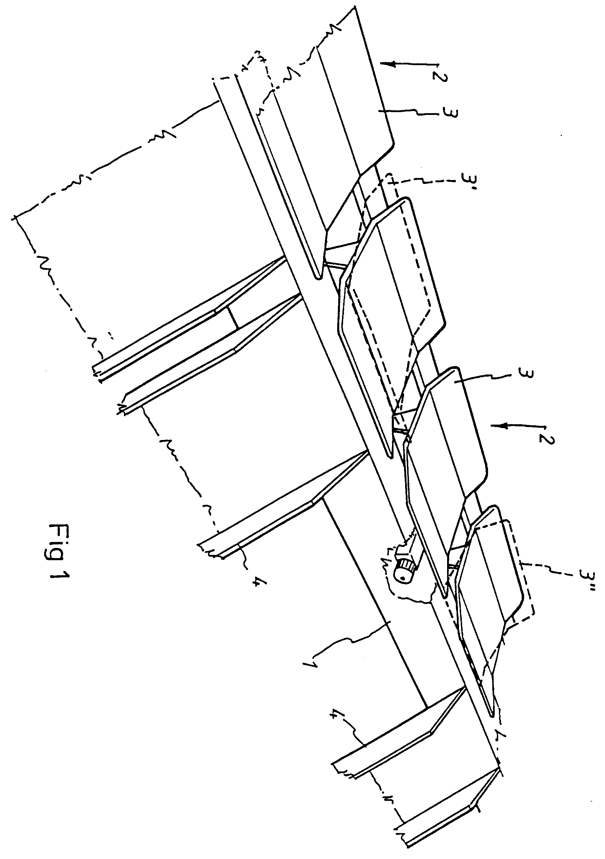

The conveyor shown in Figure 1 is in principle of the type as shown in publication WO 90/09944. The conveyor is thereby provided with rails 1, which define a track along which a plurality of trolleys or carrying means 2 are movable during operation. Each of said carrying means 2 comprises a supporting surface or dish 3, which can be pivoted to the left about a pivot pin extending in the longitudinal direction of the track defined by the rails 1, into the position 3' illustrated in dotted lines in Figure 1, and/or to the right into the position 3'' shown in dotted lines in Figure 1.

As is generally known, when using such a conveyor objects may be placed on the supporting surfaces 3 at one or more stations, in order to be moved by means of the conveyor and subsequently be delivered to for example chutes 4 diagrammatically illustrated in Figure 1 at one of possibly several predetermined stations.

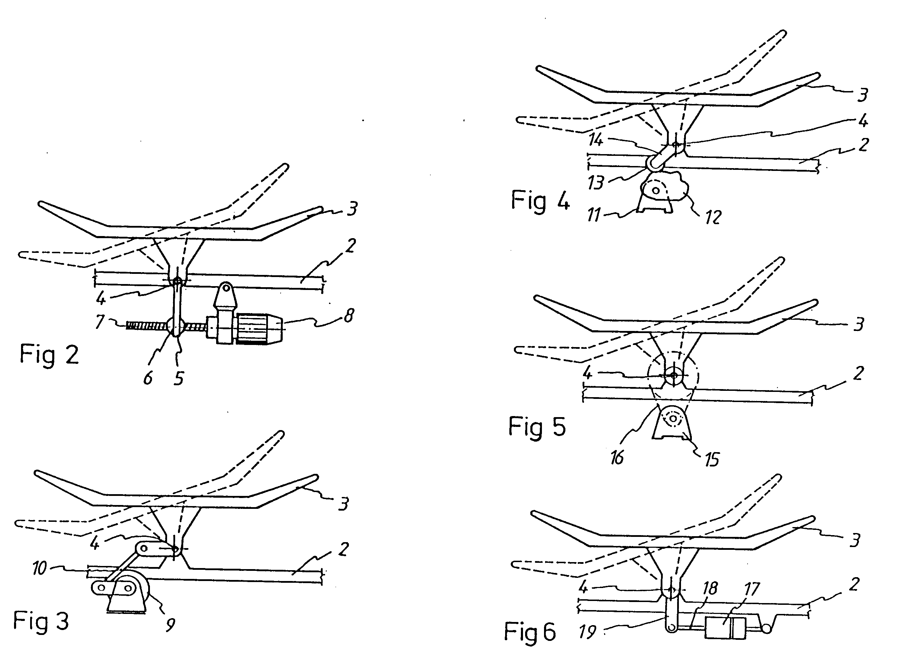

According to the invention an electrically controlled driving means is provided between the supporting surface 3 and the remaining part of the carrying means 2, by means of which the supporting surface 3 can be adjusted about the tilting axis with respect to the remaining part of the carrying means 2. A first embodiment of such a construction is diagrammatically shown in Figure 2.

As is diagrammatically shown in said Figure, the supporting surface 3 is pivotable about a pivot pin 4 with respect to the remaining part of the carrying means 2. An arm 5 is thereby connected to the supporting surface 3, said arm rotatably supporting a nut-shaped member 6. A threaded spindle 7 is screwed into said nut-shaped member 6, which spindle can be driven in two directions by means of an electromotor 8, which is connected to the carrying means 2.

During the movement of the carrying means 2 provided with the supporting surface 3 and supporting the motor 8, the motor 8 can be actuated, in a manner known per se, by means of electronic, optical, acoustic and/or magnetic signals and the like, at desired locations along the track along which the carrying means in question is moving, so that, at any desired location along the track along which the carrying means in question is being moved, the supporting surface can be pivoted clockwise or anti-clockwise through a desired angle about the pivot pin 4 from the position shown in full lines in Figure 2. This makes it possible to move the supporting surface to a suitable position, pivoted from the position shown in full lines in Figure 2, in time to be able to place an object on the supporting surface or remove an object therefrom as efficiently and quickly as possible, possibly dependent on the weight and/or the dimensions of the object in question, at a station where an object is to be placed on the supporting surface as well as at a station where the object in question is to be removed from the supporting surface.

Further, as stated above already, it is possible to pirot the supporting surface during passing of bends in such a way that sliding of an object from the supporting surface in such a bend is prevented.

Of course a large number of variations to the embodiment diagrammatically shown in Figure 2 are conceivable within the spirit and scope of the invention, a few such possible variations being shown in Figures 3 - 6.

In the embodiment shown in Figure 3 some sort of crank-connecting rod mechanism 10 is provided between a driving motor 9 connected to the carrying means and the supporting surface 3.

In the embodiment shown in Figure 4 a motor 11 is provided on the supporting frame, by means of which a cam 12 having a desired profile can be pivoted in the one and/or the other direction. A follow-on roller 13, which is rotatably supported by an arm 14 secured to the supporting surface 3, coacts with the cam 12.

In the embodiment of Figure 5 a motor 15 mounted on the carrying means 2 is connected to the supporting surface via a chain and a chain wheel transmission 16, so that the supporting surface 3 can be pivoted in the one and/or the other direction via said chain and said chain wheel transmission 16 by means of the electromotor 15.

In the embodiment shown in Figure 6 a lifting magnet 17 acting as a motor is used as a driving means, a connecting rod 18 thereof being connected to an arm 19 secured to the supporting surface 3.

It will be apparent that thus many variations are conceivable for a remotely controlled driving means to be mounted on the carrying means 2, by means of which the supporting surface is pivotable with respect to the carrying means.

Furthermore it will be apparent to a person skilled in the art that instead of the dish-shaped supporting surface 3 shown in the Figures of the present application it is also possible to use a supporting surface in the shape of a conveyor belt, as is disclosed in French Patent No. 2,475,015, wherein said supporting surface comprised of an endless conveyor belt can be pivoted with respect to the carrying means supporting the endless conveyor belt in a similar manner as the dish-shaped supporting surface 3.

The power supply of the driving means can be effected through a conductor system, through a system of generators moving along with the carrying means or through batteries and the like disposed on the carrying means.

## Claims

1. A conveyor provided with trolleys which are movable along a closed track, each of said trolleys being provided with a supporting surface, which is intended for receiving an object to be moved along at least part of said track, whereby a trolley is provided with an electrically controlled driving means provided between said supporting surface and the remaining part of the trolley, by means of which the supporting surface is pivotable through a desired angle with respect to the remaining part of the trolley, about a pivot pin extending at least substantially in the direction of movement of the trolley, so as to discharge the object present on the supporting surface from said supporting surface at a desired location, characterized in that along said track means are disposed for pivoting a supporting surface about the pivot pin in bends in such a manner, that objects are prevented from sliding off the supporting surface under the influence of the centrifugal force.

2. A conveyor according to claim 1, characterized in that said supporting surface is a dish.

3. A conveyor according to claim 1, characterized in that said supporting surface is an endless conveyor belt extending transversely to the desired track.

4. A conveyor according to any one of the preceding claims, characterized in that said driving means comprises a remotely controlled electromotor.

5. A conveyor according to any one of the claims 1 - 3, characterized in that said driving means comprising a remotely controlled lifting magnet.

6. A conveyor according to any one of the preceding claims, characterized in that generators moving along with the carrying means are provided for generating the power required for the driving means.
